# EUROPÄISCHE PATENTSCHRIFT

(11) **EP 2 274 156 B1**
(45) Veröffentlichungstag und Bekanntmachung des Hinweises auf die Patenterteilung: **08.08.2012**
(21) Anmeldenummer: 09719435.1
(22) Anmeldetag: 11.03.2009
(51) Int. Cl.: B29C 70/48, F16C 13/00

(54) **VERFAHREN ZUR HERSTELLUNG EINER WALZE FÜR DIE BEARBEITUNG BANDFÖRMIGEN MATERIALES UND NACH DIESEM VERFAHREN HERGESTELLTE WALZE**
METHOD FOR PRODUCING A ROLL FOR PROCESSING STRIP-SHAPED MATERIAL AND ROLL PRODUCED ACCORDING TO SAID METHOD
PROCÉDÉ DE FABRICATION D'UN ROULEAU POUR L'USINAGE D'UN MATÉRIAU EN FORME DE BANDE ET ROULEAU FABRIQUÉ CONFORMÉMENT À CE PROCÉDÉ

(30) Priorität: 14.03.2008 DE 102008014197; 26.02.2009 DE 102009010429
(43) Veröffentlichungstag der Anmeldung: 19.01.2011
(73) Patentinhaber: Thoenes Dichtungstechnik GmbH, 01665 Klipphausen (DE)
(72) Erfinder: ZOCHER, Rudolf, 01665 Diera-Zehren OT Nieschuetz (DE)
(74) Vertreter: Lippert, Stachow & Partner
(86) Internationale Anmeldenummer: PCT/EP2009/052868
(87) Internationale Veröffentlichungsnummer: WO 2009/112528

(56) Entgegenhaltungen:
- EP-A- 0 321 228
- WO-A-97/30651
- WO-A-2006/118448
- US-A- 4 762 740
- US-A1- 2004 151 857
- US-A1- 2005 042 109

## Beschreibung

Die Erfindung betrifft ein Verfahren zur Herstellung einer Walze für die Bearbeitung bandförmigen Materiales und eine Walze für die Bearbeitung bandförmigen Materiales mit einem zylindrischen Walzenformkörper mit einer Längserstreckung in axialer Richtung.

Walzen der hier in Frage kommenden Art werden insbesondere bei Druckmaschinen als Druckwalzen - hier auch als Druckzylinder bezeichnet - oder Bahnführungswalzen eingesetzt.

Bekannte Walzen dieser Art sind langgestreckte Walzen, mit einer zumindest im Wesentlichen zylindrischen Außenkontur. Dabei sind auch Walzen bekannt, die eine leicht von der zylindrischen Kontur abweichende Gestaltung aufweisen. Bahnführungswalzen haben je nach Einsatzzweck beispielsweise eine leicht ballige Form, die der besseren Bahnführung dienen soll, beispielsweise um Dehnungen des Bahnführungsmateriales auszugleichen. Derartige Abweichungen sollen im Weiteren auch unter zylindrischen Körpern verstanden werden.

In einer Druckmaschine, wie sie beispielsweise in der DE 10 2006 048 141 B1 beschrieben ist, werden diese Walzen als angetriebene oder mitlaufende Bahnführungswalzen eingesetzt, um ein bandförmiges Material, das bedruckt werden soll, in der Maschine zu führen. Zum Bedrucken selbst wird eine Walze der eingangs genannten Art als Druckwalze eingesetzt, auf deren Umfangsfläche Druckmuster aufgebracht sind. Während des Druckvorganges wird die Umfangsfläche dann mit einem Farbstoff versehen, der sodann entsprechend der Druckmuster auf Druckmaterial, beispielsweise Papier, das mit der Umfangsfläche kontaktiert wird, übertragen wird.

Wie bereits in der DE 749 892 wird das Problem angesprochen, dass solche Walzen, die zumeist einen Walzenkern aufweisen, der aus Vollmaterial gefertigt ist, einen erheblichen Materialeinsatz mit hohen Werkstoffkosten erfordern und auch große Massen und Gewichte mit sich bringen, die den Montageaufwand und den Herstellungsaufwand erheblich vergrößern.

Mit der DE 197 53 744 A1 und der DE 10 2005 023 331 A1 wurden Lösungen vorgestellt, die den großen Materialeinsatz durch den Einsatz von Hohlkernen vermeiden, auf die dann der eigentliche Mantel, der die Druckwalzen bildet, aufgebracht wird. Der dabei entstehende Herstellungsaufwand ist - bedingt durch die zahlreichen Verfahrensschritte - jedoch erheblich und die erreichte notwendige Festigkeit nur bedingt befriedigend.

Die Technik des Flechtens ist ein an sich bekanntes Verfahren, z.B. bei der Herstellung von Schlauchdichtungen oder von Schläuchen, wie in der DE 32 40 029 A1 beschrieben. Es ist auch bekannt, das Flechten bei der Herstellung von Rohren einzusetzen, wie in der DE 28 34 511 C2 beschrieben. Hierbei wird eine geflochtene Ummantelung mit einem Kunstharz getränkt. Dieses Verfahren hat die Aufgabe, die Druckfestigkeit von Rohrleitungen auf kostengünstige Weise zu erhöhen.

Aus der WO 2005/105417 A1 ist ein Verfahren zur Herstellung einer Hohlstruktur und die Hohlstruktur selbst bekannt, bei der ein textiles Halbzeug geflochten wird, das sodann mit einem Blasformverfahren zu der Hohlstruktur, beispielsweise einer Getriebewelle, geformt wird. Hierbei wird das textile Halbzeug in ein Formwerkzeug gelegt. In das textile Halbzeug wird sodann ein Blasschlauch gesteckt, der mit Druckluft beaufschlagt wird. Damit wird das textile Halbzeug an die Innenseite des Formwerkzeuges gepresst oder an eine dazwischen liegende Pressform aus einem Hybridgarn gepresst. Unter Wärmeeinwirkung durch das Formwerkzeug verschmelzen die thermoplastischen Fasern zu einer Matrix.

Die Herstellung eines textilen Halbzeuges wird durch eine Radialflechttechnologie ermöglicht. Mit der Radialflechttechnologie werden Rundgeflechte erzeugt, bei denen die Fäden in einem Flechtmittelpunkt miteinander gewebeartig miteinander verkreuzt werden. Radialflechtmaschinen zeichnen sich dadurch aus, dass die Achse der Klöppel radial zum Flechtmittelpunkt gerichtet sind, so dass auch der Abzug der Fäden von den Klöppeln radial zu dem Flechtmittelpunkt erfolgt.

Die Fäden selbst bestehen aus einer Vielzahl von Filamenten.

Bei dem Verfahren der Formgebung ist nicht zu gewährleisten, dass die Hohlstruktur, wenn sie als im Querschnitt rotationssymmetrische Hohlstruktur ausgebildet wird, keine Unwuchten aufweist, was sich im Falle von rotierenden Körpern nachteilig auswirken kann.

Die US 2005/0042109 A1 offenbart ein Verfahren zur Herstellung eines hohlen Verbundkörpers. Dabei wird auf einen Dorn eine Lage aus Verbundfasern aufgeflochten, die Verbundfaserlage mit dem Dorn in eine Form gelegt und mit einem Harz getränkt, das Harz ausgehärtet und der Dorn herausgenommen.

In der WO 97/30651 ist eine Fixiereinrichtung für Knochen bei aufgetretenen Brüchen beschrieben, die zumindest teilweise aus einem Faserverbundstoff besteht.

Die US 4 762 740 offenbart eine Form und ein Verfahren zum Gießharzformen.

Die EP 0 321 228 beschreibt ein Verfahren zur Verstärkung ein faserverstärkten Kunststoffbauteils, dessen zylindrischer Teil mit einem Fasermaterial umflochten und anschließend über ein Tränken mit einem Harz stabilisiert wird.

Die WO 20061118448 offenbart ein Herstellungsverfahren eine Bauteils aus Faserverbundwerkstoff für den Einsatz in Luftfahrzeugen. Dieser besteht aus mehreren geflochtenen Lagen, die in einer Form mit einem Harz getränkt werden.

Die Aufgabe der Erfindung besteht nunmehr darin, eine Walze herstellen zu können, die mit geringem Aufwand, insbesondere mit geringem Materialaufwand, herstellbar ist und eine hohe Betriebszuverlässigkeit aufweist.

Die Aufgabe wird durch ein Herstellungsverfahren nach Anspruch 1 gelöst. Die Ansprüche 2 bis 17 zeigen günstige Ausgestaltungen des Verfahrens. Weiterhin wird die Aufgabe durch eine Walze nach Anspruch 18 gelöst, wobei die Ansprüche 19 bis 39 eine günstige Ausgestaltung der Walze zeigen.

Erfindungsgemäß wird ein textiles Halbzeug auf einen formstabilen zylindrischen Kern durch Aufflechten in Radialflechttechnik aufgebracht.

Dabei dient der Kern a priori nicht der mechanischen Stabilisierung, sondern nur der Formgebung. Durch seine Formstabilität werden genaue geometrische Verhältnisse eingestellt, die dazu beitragen, spätere Unwuchten der Walze zu vermeiden.

Das textile Halbzeug wird zusammen mit dem Kern in eine die äußere Mantelfläche des textilen Halbzeuges umschließende zylindrische Hohlform eingebracht, die eine der Außenfläche der Walze formgebende Innenfläche aufweist. Nach Verschließen der Hohlform wird ein duroplastisch aushärtendes Matrixmaterial in die Hohlform eingebracht.

Dies kann auch unter Vakuumunterstützung vollzogen werden, wobei die Hohlform nach dem Verschließen und vor Einbringen des Matrixmateriales mit Vakuum beaufschlagt wird und dann das Matrixmaterial unter Vakuumbedingungen eingebracht wird, wodurch eine besonders gute Infiltration des Matrixmateriales in das textile Halbzeug erreicht wird.

Eine Matrix wird in dem textilen Halbzeug durch Infiltration und Aushärten des Matrixmateriales unter Bildung eines Walzenformkörpers erzeugt. Anschließend erfolgt das Ausformen des Walzenformkörpers.

Die Besonderheit des erfindungsgemäßen Verfahrens besteht darin, dass im Gegensatz beispielsweise zum Laminieren oder zu dem Blasformverfahren das Geflecht mit einem Form- und Kraftschluss auf den formgebenden formstabilen Kern aufgebracht wird. Damit wirkt auf den Kern und innerhalb des Geflechts selbst bereits eine Spannkraft, die eine hohe Stabilität mit sich bringt.

Zur Herstellung einer erforderlichen Wandungsstärke kann das Flechten auch mehrfach in mehreren Lagen durchgeführt werden. Je nach Einsatzzweck können damit Parameter der Walzen beeinflusst werden, so beispielsweise das Schwingungsverhalten oder die Oberflächenbeschaffenheit.

Vorzugsweise wird das Verfahren derart ausgeführt, dass das textile Halbzeug auf einen Kern mit einem über seine Längserstreckung in axialer Richtung gleichen Außendurchmesser aufgebracht wird. Durch das Einlegen in die Innenform, die ihrerseits wieder eine exakt zylindrische Außenform des Mantels realisiert, wird gewährleistet, dass der Innendurchmesser des Mantels ebenfalls gleich ist, so dass Unwuchten vermieden werden können.

Dies wird insbesondere dadurch unterstützt, dass in einer Verfahrensvariante der Walzenformkörper mit einer über den Umfang und über die Längserstreckung konstanten Wandstärke zwischen Kern und Mantelfläche hergestellt wird.

Es ist jedoch vorteilhaft, den Kern so zu gestalten, dass er in der Art einer verlorenen Schalung in dem Walzenformkörper, d.h. nach dem Aushärten der Matrix, verbleibt. Damit wird einerseits mindestens ein Arbeitsgang gespart. Andererseits kann der verbleibende Kern auch noch zusätzlich Stützfunktionen mit übernehmen.

In einer anderen Variante des Verfahrens ist vorgesehen, dass das textile Halbzeug auf einen einfallenden Kern (5) aufgebracht wird und dieser Kern aus dem Walzenformkörper nach dem Ausformen entfernt wird. Somit kann einerseits eine Gewichtsreduzierung erreicht werden. Außerdem wird somit der relativ aufwendig zu fertigende Kern einer mehrfachen Nutzung unterzogen.

Eine einfache Realisierung der Matrix ist in einem Einsatz eines duroplastischen Werkstoffes in Form von Epoxydharz zu sehen. Darüber hinaus ist aber auch anderes Material, wie beispielsweise Vinylesterharz oder Polyesterharz als Matrix einsetzbar.

Für die Einstellung einer besonderen Oberflächengüte kann es zweckmäßig sein, dass die äußere Mantelfläche des Mantels nach dem Härten bearbeitet, insbesondere geglättet wird. Dies kann durch ein Verfüllen von Unebenheiten in der Art des Spachtelns erfolgen.

In einer weiteren Variante des Verfahrens ist vorgesehen, dass der Mantel außen mit einer Beschichtung oder einem Schichtsystem versehen wird. Insbesondere bei Druckwalzen ist es erforderlich, dass die Oberfläche einerseits eine geringe Rauhigkeit aufweist, was zum einen mit dem Schichtauftrag erreicht werden kann. Zum anderen kann mit dem Schichtaufbau auch die Herstellung einer Schicht realisiert werden, die der mittelbaren oder unmittelbaren Aufnahme des Druckmusters dient. Unter einer mittelbaren Aufnahme soll beispielsweise die Herstellung einer elektrisch leitfähigen Schicht verstanden werden, auf die dann beispielsweise mittels elektrogalvanischem Auftrags eine Kupferschicht aufgebracht werden kann, in die sodann das Druckmuster geätzt wird.

Es kann auch vorgesehen werden, dass die Beschichtung oder das Schichtsystem aus reibungs- oder haftungsminderndem Material besteht. Damit können beispielsweise reibungs- oder haftungsmindernde Eigenschaften auf der Manteloberfläche eingestellt werden, mit denen der Lauf des bandförmigen Materiales günstiger gestaltet oder Abrieb verringert werden kann.

In einer weiteren Verfahrensvariante ist vorgesehen, dass in die in axialer Richtung gegenüberliegenden Enden des Walzenformkörpers Lasteinleitungselemente eingeklebt werden. Somit wird es möglich, den Walzenformkörper zunächst gut zu handhaben, da während des Herstellungsvorganges beide Enden frei zugänglich sind. Erst nach dem Ausformen werden dann die Enden mit den Lasteinleitungselementen, z.B. Wellenzapfen, versehen, wobei das Einkleben eine sehr effektive Verbindungsvariante darstellt.

Beim Einsatz eines Kernes, der in dem Walzenformkörper verbleibt, ist es auch möglich, dass an den Kern Lasteinleitungselemente angeformt sind, die nach dem Ausformen aus dem Walzenformkörper herausragen. Diese können auch wieder Wellenzapfen darstellen. Der Vorteil ist hierbei, dass der Kern sogleich als Ganzes hergestellt werden kann, so dass ein zusätzlicher Arbeitsgang, nämlich der des Einklebens entfallen kann.

In einer konkreten Ausführungsvariante des erfindungsgemäßen Verfahrens ist vorgesehen, dass das textile Halbzeug mit drei Fadensystemen geflochten wird. Dabei besteht ein erstes Fadensystem aus mehreren sich im wesentlichen in Richtung der axialen Längserstreckung erstreckenden Längsfäden, ein zweites Fadensystem aus mehreren ersten Flechtfäden, die zu den Längsfäden schräg gekreuzt sind und ein drittes Fadensystem aus mehreren zweiten Flechtfäden, die zu den Längsfäden schräg und entgegengesetzt zu den ersten Flechtfäden gekreuzt sind.

Durch einen derartigen Lagenaufbau wird gewährleistet, dass die eingesetzten Verstärkungsfäden in der Hauptbeanspruchungsrichtung angeordnet sind, wodurch eine hohe Formstabilität des Walzenkörpers erreicht wird. Insbesondere die Längsfäden sind geeignet, eine Durchbiegung der Walze vermeiden zu helfen.

Dies wird insbesondere dadurch erreicht, dass die Längsfäden so in das Geflecht eingebracht werden, dass sie zur Richtung der axialen Längserstreckung einen Winkel von höchstens 5° einschließen.

Weiterhin kann von den Flechtfäden jeder Winkel zweckentsprechend ausgenutzt werden, den eine Radialflechtmaschine bietet, indem die ersten Flechtfäden so geflochten werden, dass sie zur Richtung der Längserstreckung einen Winkel von 10° bis 80° einschließen.

Vorzugsweise ist jedoch vorgesehen, dass die ersten Flechtfäden so geflochten werden, dass sie zur Richtung der Längserstreckung einen Winkel von 20° bis 45° einschließen.

In gleicher Weise können die zweiten Flechtfäden so geflochten werden, dass sie zur Richtung der Längserstreckung einen Winkel von 10° bis 80° einschließen.

Auch hierbei ist es zweckmäßig, dass die zweiten Flechtfäden so geflochten werden, dass sie zur Richtung der Längserstreckung einen Winkel von 20° bis 45° einschließen.

Unter Ausnutzung der technologischen Möglichkeiten ist es zweckmäßig, dass die ersten und die zweiten Flechtfäden so geflochten werden, dass sie betragsmäßig den gleichen Winkel zur Richtung der Längserstreckung einschließen.

Die Fäden können alle die gleiche Feinheit oder unterschiedliche Feinheiten aufweisen. Durch die Veränderung der Feinheit der Flechtfäden kann auf die Anzahl der Filamente und der Wandstärke Einfluss genommen werden. Die Feinheit wird üblicher Weise mit der Bezeichnung "Tex" und einem Zahlenwert angegeben, der die Masse eines Fadens in Gramm pro 1000 m Fadenlänge kennzeichnet. Die Feinheit kann zweckmäßiger Weise mit 2400 Tex gewählt werden. Dies wird bestimmt vom Einsatzzweck der Walze. Soll diese beispielsweise als Druckwalze oder Druckzylinder dienen, ist eine Durchbiegung weitgehend zu vermeiden. Hierbei kann es sehr zweckmäßig sein, die Längsfäden robust zu gestalten. Um dabei jedoch die mit einer höheren Feinheit (Garnstärke) verbundenen Einflüsse auf die Oberflächengüte, die ja gerade bei Druckwalzen von entscheidender Bedeutung ist, so gering wie möglich zu halten, kann die Garnstärke der Flechtfäden geringer gehalten werden.

Bei der anordnungsseitigen Lösung der Aufgabenstellung ist vorgesehen, dass die Walze für die Bearbeitung bandförmigen Materiales mit einem zylindrischen Walzenformkörper mit einer Längserstreckung in axialer Richtung aufgebaut ist, der aus einem Werkstoffverbund aus einem mit einem in Radialflechttechnik geflochtenem textilen Halbzeug in das eine Matrix aus duroplastisch ausgehärtetem Matrixmaterial eingebracht ist, besteht.

Um Unwuchten zu vermeiden, ist es vorteilhaft, wenn der Walzenformkörper so ausgebildet ist, dass er eine über den Umfang und über die Längserstreckung konstante Wandstärke aufweist.

Die Matrix wird aus einem Matrixmaterial erzeugt, das im Ausgangszustand viskos ist. Nach Infiltration in das textile Halbzeug wird dann ein Aushärtvorgang eingeleitet. Dies kann zeitlich gesteuert sein, beispielsweise durch den Zeitpunkt des Komponentenmischens ausgelöst werden, oder aber auch durch Fremdeinwirkung, beispielsweise durch eine Strahleneinwirkung provoziert oder beschleunigt werden.

In jedem Falle haben sich Matrixmaterialen wie Epoxydharz, Vinylesterharz oder Polyesterharz als zweckmäßig erwiesen.

In einer Ausgestaltung der erfindungsgemäßen Walze ist vorgesehen, dass der Walzenformkörper als Mantel auf einem Kern angeordnet ist. Dies bedeutet in aller Regel, dass der Kern beim Herstellen in der aus dem Bauwesen bekannten "verlorenen Schalung", bei der die Schalung im Bauwerk verbleibt, ebenfalls in dem Walzenformkörper verbleibt.

Da der Kern selbst im Wesentlichen nur der Formgebung des Mantels dient, kann dieser in einer erfindungsgemäßen Ausgestaltung aus Kunststoffmaterial bestehen. Der Kern muss allerdings dabei eine solche Festigkeit aufweisen, dass er die Spannkraft aufnimmt, die das Geflecht des textilen Halbzeuges bei der Herstellung auf ihn ausübt.

In einer Ausgestaltung der Walze ist vorgesehen, dass die Oberfläche des Mantels geglättet ist, was beispielsweise zur Herstellung einer Druckwalze sehr zweckdienlich ist, aber auch vorteilhaft für die Gestaltung als Bahnführungswalze sein kann.

Eine Glättung kann beispielsweise durch ein Verspachteln erreicht werden. Dieser dafür erforderliche Arbeitsschritt kann allerdings dadurch eingespart werden, dass die Oberfläche des Mantels durch eine Füllung des textilen Halbzeugs mit der Matrix geglättet ist.

Zum Zwecke der direkten Nutzung einer erfindungsgemäßen Walze ist vorgesehen dass die Oberfläche des Mantels beschichtet ist.

Eine solche Schicht kann beispielsweise darin bestehen, dass die Oberfläche mit einer elektrisch leitfähigen Schicht beschichtet ist. Auf dieser können dann beispielsweise mittels galvanischer Verfahren weitere Funktionsschichten, wie eine Kupferschicht abgeschieden werden, die der Aufnahme eines Druckmusters dient.

Eine Schicht kann aber auch darin bestehen, dass die Oberfläche mit einem reibungs- oder haftungsmindernden Material beschichtet ist. Mittels einer solchen Beschichtung lassen sich insbesondere Walzen ausgestalten, auf denen keine Partikel haften sollen, wie beispielsweise Bahnführungswalzen oder aber auch Gegendruckwalzen, die gegenüber einer Druckwalze angeordnet sein können, um die erforderliche Druckkraft aufzubringen.

Um die erfindungsgemäße Walze drehbar zu lagern oder sogar angetrieben zu gestalten, ist in einer Ausführungsform vorgesehen, die in axialer Richtung gegenüberliegenden Enden des Walzenformkörper mit Lasteinleitungselementen zu versehen. Diese können vorzugsweise eingeklebt sein.

Insbesondere sind die Lasteinleitungselemente als Wellenzapfen ausgebildet, die koaxial zur Mittellängsachse des Walzenformkörpers liegen.

Befindet sich noch ein Kern in dem Walzenformkörper, so kann dieser einen Hohlraum als Innenraum einschließen, in dessen beiden axialen Enden je ein Lasteinleitungselement eingeklebt ist.

Alternativ dazu können die Lasteinleitungselemente bereits an dem Kern angeformt sein.

Nachfolgend werden die Fadenlagen des textilen Halbzeugs, das ja die Grundlage für den Walzenformkörper bildet, näher beschrieben. Deren Funktionsweisen, Vorteile und Einsatzzwecke wurden bereits bei der verfahrensseitigen Lösung mit beschrieben.

Bei einer Ausführungsform einer erfindungsgemäßen Walze ist vorgesehen, dass das textile Halbzeug drei Fadensysteme aufweist. Dabei besteht ein erstes Fadensystem aus mehreren sich im Wesentlichen in Richtung der axialen Längserstreckung erstreckenden Längsfäden, ein zweites Fadensystem aus mehreren ersten Flechtfäden, die zu den Längsfäden schräg gekreuzt sind und ein drittes Fadensystem aus mehreren zweiten Flechtfäden, die zu den Längsfäden schräg und entgegengesetzt zu den ersten Flechtfäden gekreuzt sind. Dabei können die Längsfäden zur Richtung der axialen Längserstreckung einen Winkel von höchstens 5° einschließen. Die ersten und/oder zweiten Flechtfäden zur Richtung der Längserstreckung einen Winkel von 10° bis 80°, vorzugsweise einen Winkel von 20° bis 45°, einschließen. Die ersten und die zweiten Flechtfäden können auch betragsmäßig den gleichen Winkel zur Richtung der Längserstreckung einschließen.

Die Erfindung soll nachfolgend anhand eines Ausführungsbeispieles näher erläutert werden. In den zugehörigen Zeichnungen zeigt
- Fig. 1.: eine erfindungsgemäße Druckwalze,
- Fig. 2.: einen Längschnitt durch die Druckwalze,
- Fig. 3.: einen Querschnitt durch die Druckwalze,
- Fig. 4.: Verfahrensschritte a) bis f) zur Herstellung einer Druckwalze,
- Fig. 5.: eine Bahnführungswalze,
- Fig. 6.: einen Längsschnitt durch die Bahnführungswalze,
- Fig. 7.: einen Querschnitt durch die Bahnführungswalze und
- Fig. 8.: eine schematische vergrößerte Darstellung des textilen Halbzeuges mit drei Fadensystemen.

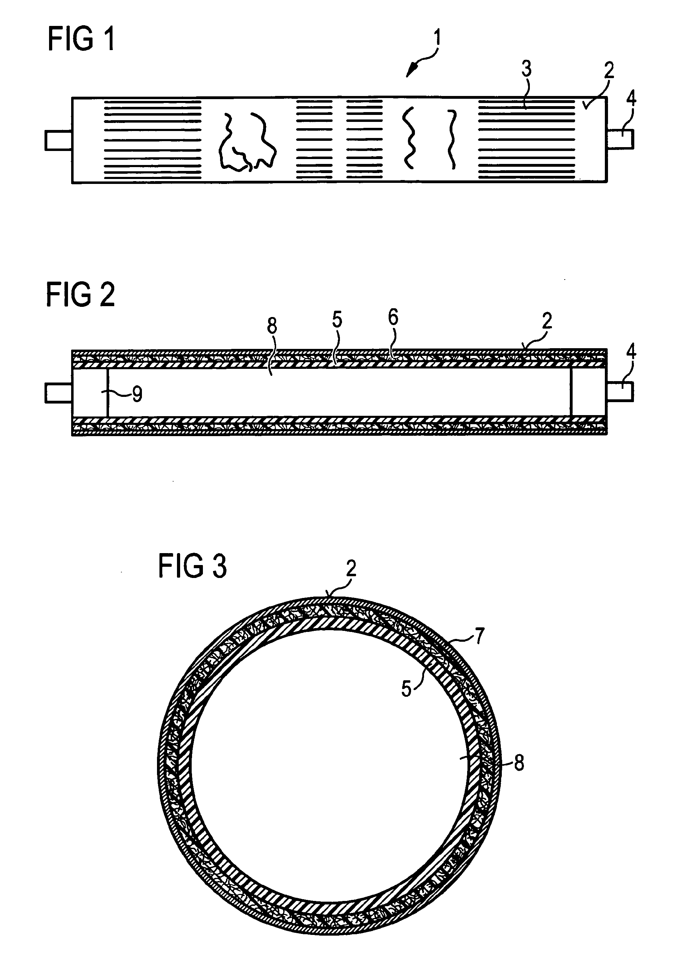

Wie in Fig. 1 dargestellt, ist eine Druckwalze 1 auf der äußeren Mantelfläche 2 mit einem Druckmuster 3 versehen, das eine Druckfarbe unterschiedlich annimmt und somit in verschiedener Dichte auf ein zu bedruckendes Papier wieder abgibt.

Die Druckwalze ist zur mechanischen Aufnahme und gegebenenfalls zum Antrieb an beiden äußeren Enden mit als Wellenzapfen 4 ausgebildeten Lasteinleitungselementen versehen.

Wie in Fig. 2 und Fig. 3 ersichtlich ist, besteht die Druckwalze 1 aus einem Kern 5, auf den ein mehrlagiger Mantel 6 mittels einem textilen Halbzeug in Flechttechnik aufgebracht wird, das nach dem Flechten mit einem fluiden Matrixmaterial getränkt wurde, das nach einer Reaktionszeit im textilen Halbzeug aushärtet.

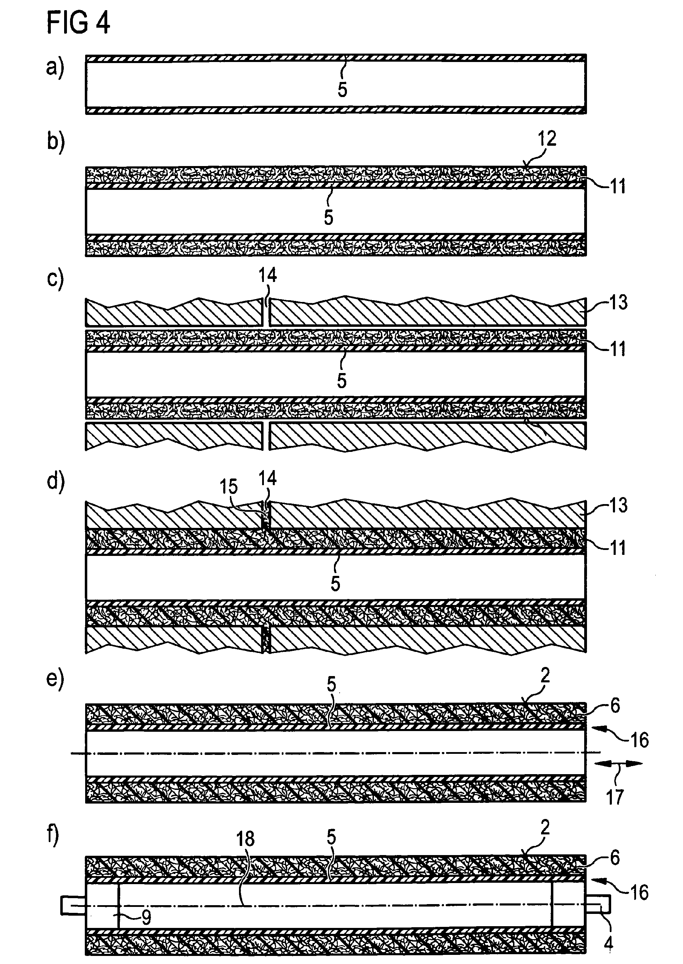

Das Verfahren hierzu ist in Fig. 4 dargestellt.

Im Verfahrensschritt a) wird zunächst von einem Kern 5 als einem formstabilen zylindrischen Kern (5) ausgegangen. Auf diesen wird in Verfahrensschritt b) durch Aufflechten in Radialflechttechnik ein textiles Halbzeug 11 aufgebracht. Dieses textile Halbzeug 11 wird zusammen mit dem Kern 5 in eine die äußere Mantelfläche 12 des textilen Halbzeuges 11 umschließende zylindrische Hohlform 13, die eine der äußere Mantelfläche 2 der Druckwalze 1 formgebende Innenfläche aufweist, eingebracht, wie dies in Schritt c) dargestellt ist. Anschließend wird die Hohlform 13 verschlossen.

Über Einfüllstutzen 14 wird sodann ein duroplastisch aushärtendes Matrixmaterial 15 in die Hohlform 13 unter Vakuumunterstützung eingebracht, wie dies in Schritt d) dargestellt ist. Innerhalb des textilen Halbzeuges 11 härtet dieses Matrixmaterial 15 sodann duroplastisch aus. Dabei bildet sich eine Matrix in dem textilen Halbzeug 11 durch Infiltration und Aushärten des Matrixmateriales 15 unter Bildung des Mantels 6 und damit eines stabilen Walzenformkörpers 16. Wie in Schritt e) dargestellt wird dieser Walzenformkörper 16 sodann aus der Hohlform 13 ausgeformt. Dabei verbleibt der Kern 5 in dem Walzenformkörper 16. In die in axialer Richtung gegenüberliegenden Enden des Walzenformkörpers 16 werden Endstücke 9 mit daran angeformten Wellenzapfen 4 eingeklebt, wie dies in Schritt f) dargestellt ist. Die Wellenzapfen 4, liegen koaxial zur Mittellängsachse 18 des Walzenformkörpers 16.

Dadurch, dass das textile Halbzeug 11 auf den Kern 5 mit einem über seine Längserstreckung in axialer Richtung 17 gleichen Außendurchmesser aufgebracht wird, kann der Walzenformkörper 16 mit einer über den Umfang und über die Längserstreckung konstanten Wandstärke zwischen Kern 5 und Mantelfläche 2 hergestellt werden.

Die Oberfläche 2 des Mantels 6 ist sodann hinreichend glatt, könnte jedoch auch präventiv noch einmal geglättet werden. Danach wird auf die Oberfläche 2 des Mantels 6 eine elektrisch leitfähige Schicht 7 abgeschieden. Dies geschieht in zwei Stufen. Zunächst wird eine dünne Kontaktschicht aufgebracht, die dafür sorgt, dass die Oberfläche des Mantels 6 leitfähig wird. Darauf wird dann die mittels elektrogalvanischem Verfahren die vollständige elektrisch leitfähige Schicht 7 in Form einer relativ harten Kupferschicht abgeschieden, in die anschließend das Druckmuster 3 eingebracht werden kann, beispielsweise über ein elektroerosives oder ein lithografisches Verfahren.

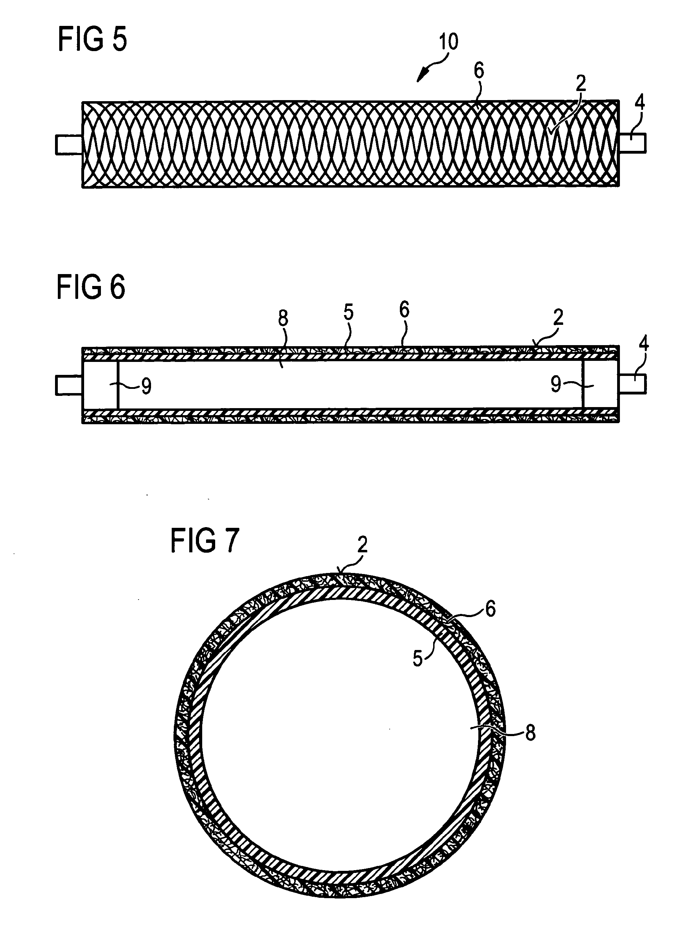

In den Fig. 5 bis Fig. 7, ist eine Bahnführungswalze 10. die auch als Gegendruckwalze funktionieren kann, dargestellt. Gleiche Bezugszeichen weisen auf funktionsgleiche Elemente zu der Druckwalze hin.

Wie in Fig. 5 ersichtlich, wird die äußere Mantelfläche 2 durch die Oberfläche des Mantel 6 selbst gebildet, wie dies durch die Flechtstruktur gezeigt werden soll.

Die Bahnführungswalze 10 ist zur mechanischen Aufnahme und gegebenenfalls zum Antrieb an beiden äußeren Enden mit Achsstümpfen 4 versehen.

Wie in Fig. 6 und Fig. 7 ersichtlich ist, besteht die Bahnführungswalze 10 aus einem Kern 5, auf den ein mehrlagiger Mantel 6 in Flechttechnik aufgebracht wird. Wie in Fig. 4 dargestellt, werden nach dem Flechten die Flechtfasern mit einem fluiden Matrixmaterial getränkt, dass nach einer Reaktionszeit im Geflecht unter Bildung der Matrix aushärtet, wodurch der Mantel 6 und damit auch der Walzenformkörper 16 entsteht.

Der Kern 5 bildet einen Hohlraum 8, in dessen beiden axialen Enden je ein Wellenzapfen 4 eingeklebt ist, die mit je einem Achsstumpf versehen sind, die die Walzenachsen bilden. Die Wellenzapfen 4 liegen koaxial zur Mittellängsachse 18 des Walzenformkörpers 16.

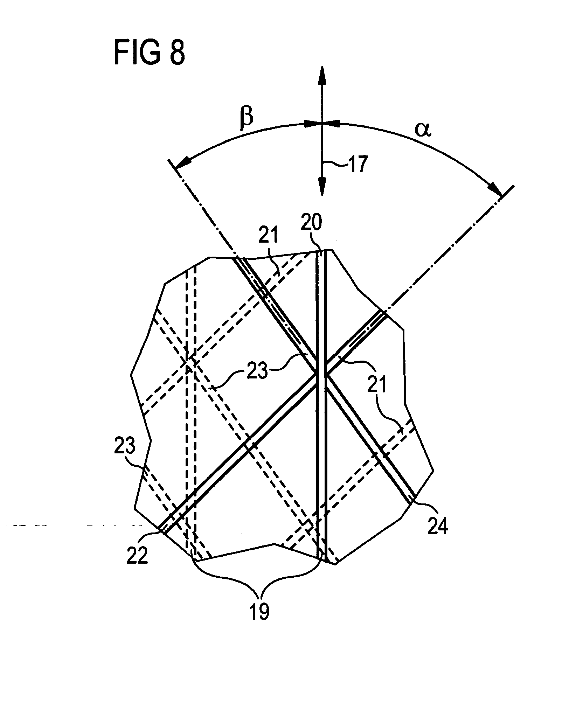

Wie in Fig. 8 dargestellt, weist das textile Halbzeug 11 der Druckwalze 1 drei Fadensysteme auf, wobei ein erstes Fadensystem 19 aus mehreren sich im Wesentlichen in Richtung der axialen Richtung 17 erstreckenden Längsfäden 20, ein zweites Fadensystem 21 aus mehreren ersten Flechtfäden 22, die zu den Längsfäden 20 mit einem Winkel α schräg gekreuzt sind, ein drittes Fadensystem 23 aus mehreren zweiten Flechtfäden 24, die zu den Längsfäden 20 mit einem Winkel β schräg und entgegengesetzt zu den ersten Flechtfäden 22 gekreuzt sind, besteht. In Fig. 8 wurde nur jeweils einer der Fäden 20, 22, 24 voll und die anderen zum jeweiligen Fadensystem 19, 21, 23 gehörenden Fäden zur besseren Übersicht mit unterbrochenen Linien dargestellt. In diesem Beispiel sind die Winkel α und β betragsmäßig gleich und betragen hier 45°.

### Bezugszeichenliste

- 1: Druckwalze
- 2: äußere Mantelfläche
- 3: Druckmuster
- 4: Wellenzapfen
- 5: Kern
- 6: Mantel
- 7: elektrisch leitfähige Schicht
- 8: Hohlraum
- 9: Endstück
- 10: Bahnführungswalze
- 11: textiles Halbzeug
- 12: äußere Mantelfläche des textilen Halbzeuges
- 13: Hohlform
- 14: Einfüllstutzen
- 15: Matrixmaterial
- 16: Walzenformkörper
- 17: axiale Richtung
- 18: Mittellängsachse
- 19: erstes Fadensystem
- 20: Längsfaden
- 21: zweites Fadensystem
- 22: erster Flechtfaden
- 23: drittes Fadensystem
- 24: zweiter Flechtfaden

## Patentansprüche

1. Verfahren zur Herstellung einer Walze für die Bearbeitung bandförmigen Materiales umfassend folgende Schritte:
Aufbringen eines textilen Halbzeugs (11) auf einen formstabilen zylindrischen Kern (5) durch Aufflechten in Radialflechttechnik,
Einbringen des textilen Halbzeugs (11) zusammen mit dem Kern (5) in eine die äußere Mantelfläche (12) des textilen Halbzeuges (11) umschließende zylindrische Hohlform (13), die eine der Außenfläche (2) der Walze (1) formgebende Innenfläche aufweist,
Verschließen der Hohlform (13,
Einbringen eines duroplastisch aushärtenden Matrixmateriales (15) in die Hohlform (13),
Ausbilden einer Matrix in dem textilen Halbzeug (11) durch Infiltration und Aushärten des Matrixmateriales (15) unter Bildung eines Walzenformkörpers (16) und
Ausformen des Walzenformkörpers (16).

2. Verfahren nach Anspruch 1, **dadurch gekennzeichnet, dass** das textile Halbzeug (11) mit drei Fadensystemen (19; 21; 23) geflochten wird, wobei ein erstes Fadensystem (19) aus mehreren sich im Wesentlichen in Richtung (17) der axialen Längserstreckung erstreckenden Längsfäden (20), ein zweites Fadensystem (21) aus mehreren ersten Flechtfäden (22), die zu den Längsfäden (20) schräg gekreuzt sind und ein drittes Fadensystem (23) aus mehreren zweiten Flechtfäden (24), die zu den Längsfäden (20) schräg und entgegengesetzt zu den ersten Flechtfäden (22) gekreuzt sind, besteht.

3. Verfahren nach Anspruch 2, **dadurch gekennzeichnet, dass** die Längsfäden (20) so geflochten werden, dass sie zur Richtung (17) der axialen Längserstreckung einen Winkel von höchstens 5° einschließen.

4. Verfahren nach Anspruch 2 oder3, **dadurch gekennzeichnet, dass** die ersten Flechtfäden (22) und/oder die zweiten Flechtfäden (24) so geflochten werden, dass sie zur Richtung (17) der Längserstreckung einen Winkel (α) von 10° bis 80°, vorzugsweise von 20° bis 45°, einschließen.

5. Verfahren nach einem der Ansprüche 2 bis4, **dadurch gekennzeichnet, dass** die ersten (22) und die zweiten Flechtfäden (24) so geflochten werden, dass sie betragsmäßig den gleichen Winkel (α, β) zur Richtung (17) der Längserstreckung einschließen.

6. Walze für die Bearbeitung bandförmigen Materiales mit einem zylindrischen Walzenformkörper (16) mit einer Längserstreckung in axialer Richtung (17), **dadurch gekennzeichnet, dass** der Walzenformkörper (16) aus einem Werkstoffverbund aus einem mit einem in Radialflechttechnik geflochtenen textilen Halbzeug (11) in das eine Matrix aus duroplastisch ausgehärtetem Matrixmaterial (15) eingebracht ist, besteht.

7. Walze nach Anspruch 6, **dadurch gekennzeichnet, dass** der Walzenformkörper (16) als Mantel (6) auf einem Kern (5) angeordnet ist.

8. Walze nach einem der Ansprüche 6 oder7, **dadurch gekennzeichnet, dass** die Oberfläche (2) des Mantels (6) geglättet ist.

9. Walze nach einem der Ansprüche 6 bis 8, **dadurch gekennzeichnet, dass** die Oberfläche (2) des Mantels (6) beschichtet ist.

10. Walze nach einem der Ansprüche 6 bis9, **dadurch gekennzeichnet, dass** die in axialer Richtung (17) gegenüberliegenden Enden des Walzenformkörpers (16) mit Lasteinleitungselementen (4; 9) versehen sind.

11. Walze nach Anspruch 10, **dadurch gekennzeichnet, dass** die Lasteinleitungselemente (4; 9) als Wellenzapfen (4) ausgebildet sind, die koaxial zur Mittellängsachse (18) des Walzenformkörpers (16) liegen.

12. Walze nach einem der Ansprüche 6 bis 11, **dadurch gekennzeichnet, dass** das textile Halbzeug (11) drei Fadensysteme (19; 21; 23) aufweist, wobei ein erstes Fadensystem (19) aus mehreren sich im Wesentlichen in Richtung (17) der axialen Längserstreckung erstreckenden Längsfäden (20), ein zweites Fadensystem (21) aus mehreren ersten Flechtfäden (22), die zu den Längsfäden (20) schräg gekreuzt sind und ein drittes Fadensystem (23) aus mehreren zweiten Flechtfäden (24), die zu den Längsfäden (20) schräg und entgegengesetzt zu den ersten Flechtfäden (22) gekreuzt sind, besteht.

13. Walze nach Anspruch 12, **dadurch gekennzeichnet, dass** die Längsfäden (20) zur Richtung (17) der axialen Längserstreckung einen Winkel von höchstens 5° einschließen.

14. Walze nach Anspruch 12 oder 13, **dadurch gekennzeichnet, dass** die ersten Flechtfäden (22) und/oder die zweiten Flechtfäden (24) zur Richtung (17) der Längserstreckung einen Winkel (α) von 10° bis 80°, vorzugsweise von 20° bis 45°, einschließen.

15. Walze nach einem der Ansprüche 12 bis 14, **dadurch gekennzeichnet, dass** die ersten (22) und die zweiten Flechtfäden (24) betragsmäßig den gleichen Winkel (α, β) zur Richtung (17) der Längserstreckung einschließen.

## Claims

1. Method for producing a roller for processing strip-like material, comprising the following steps:
applying a semifinished textile product (11) to a dimensionally stable cylindrical core (5) by braiding using a radial braiding technique,
introducing the semifinished textile product (11) together with the core (5) into a cylindrical hollow mould (13) enclosing the outer lateral surface (12) of the semifinished textile product (11), said hollow mould (13) having an inner surface that shapes the outer surface (2) of the roller (1),
closing the hollow mould (13),
introducing a thermosetting matrix material (15) into the hollow mould (13),
forming a matrix in the semifinished textile product (11) by infiltration and curing of the matrix material (15), forming a roller moulding (16), and
removing the roller moulding (16) from the mould.

2. Method according to Claim 1, **characterized in that** the semifinished textile product (11) is braided with three thread systems (19; 21; 23), wherein a first thread system (19) consists of a plurality of longitudinal threads (20) extending substantially in the direction (17) of the axial longitudinal extent, a second thread system (21) consists of a plurality of first braiding threads (22) which intersect the longitudinal threads (20) at an angle, and a third thread system (23) consists of a plurality of second braiding threads (24) which intersect the longitudinal threads (20) at an angle in the opposite direction to the first braiding threads (22).

3. Method according to Claim 2, **characterized in that** the longitudinal threads (20) are braided such that they enclose an angle of at most 5° with the direction (17) of the axial longitudinal extent.

4. Method according to Claim 2 or 3, **characterized in that** the first braiding threads (22) and/or the second braiding threads (24) are braided such that they enclose an angle (α) of 10° to 80°, preferably of 20° to 45°, with the direction (17) of the longitudinal extent.

5. Method according to one of Claims 2 to 4, **characterized in that** the first braiding threads (22) and the second braiding threads (24) are braided such that they enclose an angle (α, β) of equal magnitude with the direction (17) of the longitudinal extent.

6. Roller for processing strip-like material, having a cylindrical roller moulding (16) having a longitudinal extent in the axial direction (17), **characterized in that** the roller moulding (16) consists of a composite material made of a semifinished textile product (11) which has been braided using a radial braiding technique and into which a matrix made of thermoset matrix material (15) has been introduced.

7. Roller according to Claim 6, **characterized in that** the roller moulding (16) is arranged as a shell (6) on a core (5).

8. Roller according to either of Claims 6 and 7, **characterized in that** the surface (2) of the shell (6) is smoothed down.

9. Roller according to one of Claims 6 to 8, **characterized in that** the surface (2) of the shell (6) is coated.

10. Roller according to one of Claims 6 to 9, **characterized in that** the ends of the roller moulding (16) that are opposite one another in the axial direction (17) are provided with load introducing elements (4; 9).

11. Roller according to Claim 10, **characterized in that** the load introducing elements (4; 9) are in the form of shaft journals (4) which are located coaxially with the central longitudinal axis (18) of the roller moulding (16).

12. Roller according to one of Claims 6 to 11, **characterized in that** the semifinished textile product (11) has three thread systems (19; 21; 23), wherein a first thread system (19) consists of a plurality of longitudinal threads (20) extending substantially in the direction (17) of the axial longitudinal extent, a second thread system (21) consists of a plurality of first braiding threads (22) which intersect the longitudinal threads (20) at an angle, and a third thread system (23) consists of a plurality of second braiding threads (24) which intersect the longitudinal threads (20) at an angle in the opposite direction to the first braiding threads (22).

13. Roller according to Claim 12, **characterized in that** the longitudinal threads (20) enclose an angle of at most 5° with the direction (17) of the axial longitudinal extent.

14. Roller according to Claim 12 or 13, **characterized in that** the first braiding threads (22) and/or the second braiding threads (24) enclose an angle (α) of 10° to 80°, preferably of 20° to 45°, with the direction (17) of the longitudinal extent.

15. Roller according to one of Claims 12 to 14, **characterized in that** the first braiding threads (22) and the second braiding threads (24) enclose an angle (α, β) of equal magnitude with the direction (17) of the longitudinal extent.

## Revendications

1. Procédé de fabrication d'un rouleau pour le traitement de matériau en forme de bande, comprenant les étapes suivantes :
application d'un produit textile semi-fini (11) sur un noyau cylindrique (5) de forme stable, par tressage dans une technique de tressage radial,
introduction du produit textile semi-fini (11) conjointement avec le noyau (5) dans un moule creux cylindrique (13) entourant la surface d'enveloppe extérieure (12) du produit textile semi-fini (11), lequel moule creux présente une surface interne donnant sa forme à la surface extérieure (2) du rouleau (1),
fermeture du moule creux (13),
introduction d'un matériau de matrice à durcissement duroplastique (15) dans le moule creux (13),
création d'une matrice dans le produit textile semi-fini (11) par infiltration et durcissement du matériau de matrice (15) en formant un corps moulé en rouleau (16) et
démoulage du corps moulé en rouleau (16).

2. Procédé selon la revendication 1, **caractérisé en ce que** le produit textile semi-fini (11) est tressé avec trois systèmes de fils (19 ; 21 ; 23), un premier système de fils (19) se composant de plusieurs fils longitudinaux (20) s'étendant essentiellement dans la direction (17) de l'étendue longitudinale axiale, un deuxième système de fils (21) se composant de plusieurs premiers fils de tressage (22) qui sont croisés obliquement par rapport aux fils longitudinaux (20) et un troisième système de fils (23) se composant de plusieurs deuxièmes fils de tressage (24) qui sont croisés par rapport aux fils longitudinaux (20) obliquement et en sens opposé aux premiers fils de tressage (22).

3. Procédé selon la revendication 2, **caractérisé en ce que** les fils longitudinaux (20) sont tressés de telle sorte qu'ils forment par rapport à la direction (17) de l'étendue longitudinale axiale un angle maximal de 5°.

4. Procédé selon la revendication 2 ou 3, **caractérisé en ce que** les premiers fils de tressage (22) et/ou les deuxièmes fils de tressage (24) sont tressés de telle sorte qu'ils forment par rapport à la direction (17) de l'étendue longitudinale un angle (α) de 10° à 80°, de préférence de 20° à 45°.

5. Procédé selon l'une quelconque des revendications 2 à 4,
**caractérisé en ce que** les premiers (22) et les deuxièmes (24) fils de tressage sont tressés de telle sorte qu'ils forment en valeur absolue le même angle (α, β) par rapport à la direction (17) de l'étendue longitudinale.

6. Rouleau pour le traitement de matériau en forme de bande comprenant un corps moulé en rouleau cylindrique (16) avec une étendue longitudinale dans la direction axiale (17), **caractérisé en ce que** le corps moulé en rouleau (16) se compose d'un matériau composite constitué d'un produit textile semi-fini (11) tressé par une technique de tressage radial dans lequel est introduite une matrice constituée de matériau de matrice à durcissement duroplastique (15).

7. Rouleau selon la revendication 6, **caractérisé en ce que** le corps moulé en rouleau (16) est disposé sous forme d'enveloppe (6) sur un noyau (5).

8. Rouleau selon l'une quelconque des revendications 6 ou 7, **caractérisé en ce que** la surface (2) de l'enveloppe (6) est lissée.

9. Rouleau selon l'une quelconque des revendications 6 à 8, **caractérisé en ce que** la surface (2) de l'enveloppe (6) est revêtue.

10. Rouleau selon l'une quelconque des revendications 6 à 9, **caractérisé en ce que** les extrémités du corps moulé en rouleau (16), opposées dans la direction axiale (17), sont pourvues d'éléments conducteurs de charges (4 ; 9).

11. Rouleau selon la revendication 10, **caractérisé en ce que** les éléments conducteurs de charges (4 ; 9) sont réalisés sous forme de tourillons (4) qui sont situés coaxialement par rapport à l'axe longitudinal médian (18) du corps moulé en rouleau (16).

12. Rouleau selon l'une quelconque des revendications 6 à 11, **caractérisé en ce que** le produit textile semi-fini (11) présente trois systèmes de fils (19 ; 21 ; 23), un premier système de fils (19) se composant de plusieurs fils longitudinaux (20) s'étendant essentiellement dans la direction (17) de l'étendue longitudinale axiale, un deuxième système de fils (21) se composant de plusieurs premiers fils de tressage (22) qui sont croisés obliquement par rapport aux fils longitudinaux (20) et un troisième système de fils (23) se composant de plusieurs deuxièmes fils de tressage (24) qui sont croisés par rapport aux fils longitudinaux (20) obliquement et en sens opposé aux premiers fils de tressage (22).

13. Rouleau selon la revendication 12, **caractérisé en ce que** les fils longitudinaux (20) forment, par rapport à la direction (17) de l'étendue longitudinale axiale, un angle de 5° au maximum.

14. Rouleau selon la revendication 12 ou 13, **caractérisé en ce que** les premiers fils de tressage (22) et/ou les deuxièmes fils de tressage (24) forment, par rapport à la direction (17) de l'étendue longitudinale, un angle (α) de 10° à 80°, de préférence de 20° à 45°.

15. Rouleau selon l'une quelconque des revendications 12 à 14, **caractérisé en ce que** les premiers (22) et deuxièmes (24) fils de tressage forment, en valeur absolue, le même angle (α, β) par rapport à la direction (17) de l'étendue longitudinale.
